# EUROPEAN PATENT SPECIFICATION

(11) **EP 2 519 590 B1**
(45) Date of publication and mention of the grant of the patent: **27.10.2021**
(21) Application number: 10800866.5
(22) Date of filing: 27.12.2010
(51) Int. Cl.: C09D 5/02, C09D 7/00, B05D 5/08, B60R 21/235, D03D 1/04, D06N 3/00, D06M 11/53

(54) **FRICTION REDUCING COATINGS**
REIBUNGSMINDERNDE BESCHICHTUNGEN
REVÊTEMENTS RÉDUISANT LE FROTTEMENT

(30) Priority: 30.12.2009 US 290934 P
(43) Date of publication of application: 07.11.2012
(73) Proprietor: Dow Silicones Corporation, Midland, MI 48686-0994 (US); Dow Toray Co., Ltd., Tokyo (JP)
(72) Inventor: NOZOE, Tsugio, Ichihara-shi Chiba 299-0108 (JP); TSUJI, Yuichi, Ichihara-shi Chiba 299-0108 (JP); BLACKWOOD, William, Midland MI 48642 (US); KOJIMA, Kazuhiko, Ichihara-shi Chiba 299-0108 (JP); OZAKI, Masaru, Ichihara-shi Chiba 299-0108 (JP); HORI, Seiji, Ichihara-shi Chiba 299-0108 (JP)
(74) Representative: Murgitroyd & Company
(86) International application number: PCT/US2010/062157
(87) International publication number: WO 2011/082137

(56) References cited:
- EP-A1- 0 649 936
- WO-A1-90/02779
- WO-A2-2004/070102
- DE-A1-102004 045 128
- US-A1- 2005 059 765
- US-A1- 2006 267 324
- US-A1- 2006 276 585
- US-A1- 2009 186 543

## Description

This invention relates to antifriction coatings designed to be applied to a surface to reduce friction at that surface. In particular, it relates to friction reducing coating compositions suitable for applying as a top coat on air bags and air bag fabrics which have been coated with an elastomeric base coat.

Air bags are generally formed from a woven or knitted fabric made of synthetic fibre, for example of polyamide such as nylon-6,6 or polyester, covered on at least one of its sides with a layer of an elastomer. Air bags may be made of flat fabric pieces which are coated and then sewn together to provide sufficient mechanical strength, or may be woven in one piece with integrally woven seams. Sewn air bags are generally assembled with the coated fabric surface at the inside of the air bag. One piece woven air bags are coated on the outside of the air bag. A preferred elastomer for coating the air bag or air bag fabric is a silicone elastomer which is a cured organopolysiloxane composition, particularly a silicone rubber coating cured by hydrosilylation, that is by the reaction of alkenyl groups of one polyorganosiloxane and Si-H groups of another silicon containing material such as a polyorganosiloxane or silane.

Alternative elastomers for coating the air bag or air bag fabric are organic resin elastomers, including urethane polymers. By an 'organic resin' or 'organic polymer' we mean a polymer in which at least 50% of the atoms forming the polymer chain are carbon atoms.

US Patent 5110666 describes a fabric substrate which is coated with a novel polycarbonate-polyether polyurethane for use as a driver's side or passenger side air bag.

US Patent 6169043 describes airbag coating compositions comprising a mix of polyurethane and polyacrylate constituents to provide a low permeability coating on a fabric surface.

US Patent 7543843 describes the use of hybrid resins as airbag coatings. The hybrid resins are urethanes blended with acrylates, vinyls, and/or silicones, where at least one of the components has a glass transition temperature of 20°C or less. The urethanes are preferably of the polycarbonate, polytetramethyleneglycol, silicon based diol, or olefin-based diol type.

The following documents also may be useful in understanding the background to the present disclosure: DE 10 2004 045128 A1; US 2005/059765 A1; US 2006/276585 A1; and US2009/188543 A1.

Air bags coated with a silicone elastomer are described in many published patents and applications, for example US Patents 5789084, 5877256, 6709752, 6425600 and 6511754, and WO-A-08/020605 and WO-A-08/020635.

If an elastomer base coat is left as the only coating all the air bag, the surface properties of this base coat would result in blocking (the elastomer coated surfaces sticking to each other during storage and tight packing of the air bag in the automobile, particularly at high ambient temperatures) and very high stresses when the airbag is inflated which would result in bag failure by tearing during inflation or by delamination of the elastomer base coat from the fabric. Blocking between elastomer surfaces is also a problem during manufacture of air bags when fabric coated with elastomer is stored in a roll. Additionally, many elastomers such as silicone elastomer coatings have a high surface friction when cured.

Moreover, it has been found that the application of a curable liquid silicone rubber top coat over certain organic resin base coats, particularly urethane polymer base coats or base coats cured with an amino resin, releases a displeasing fishy smell.

US-A-5945185 describes an air bag made of silicone modified thermoplastic polyurethane resin in which the content of siloxane is 5 - 40 % by weight. Such an air bag is claimed to have reduced danger of blocking, but vehicle manufacturers have preferred to use coated fabric air bags.

US Patent 6239046 describes coating a knit, woven, or non-woven textile substrate with an adhesive polyurethane layer and then with an elastomeric polysiloxane layer. An air curtain or air bag with superior air-holding and superior heat resistance is then formed from the coated textile substrate.

US Patent 6177365 and US Patent 6177366 describe airbag coatings comprising at least two separate layers. The first layer (base coat), in contact with the airbag surface, comprises a non-silicone composition of polyurethane, polyacrylate, polyamide, butyl rubber, hydrogenated nitrile rubber or ethylene vinyl acetate copolymer. The second layer (topcoat) is a silicone material.

US Patent 6177366 describes airbag coating compositions comprising at least two separate and distinct layers. The first layer (base coat), being in contact with the airbag surface, comprises a silicone elastomer. The second layer (topcoat) is preferably a silicone resin.

US Patent 7198854 describes an anti-friction silicone varnish for textiles coated with silicone elastomers. The varnish comprises a crosslinkable silicone composition containing two silicones which react with one another in the presence of a catalyst to allow crosslinking, and a particulate component comprising powdered (co )polyamides.

JP-A-2004-167556 discloses an aqueous metal casting mould coating agent comprising diatomaceous earth as a thermal insulating agent, talc as a release agent, and bentonite as a binder.

An aqueous coating composition according to the present invention for reducing friction and/or blocking at a surface is defined in claim 1. Unless otherwise indicated the viscosities given for all aqueous dispersions of the modified clay mineral thickeners described herein were measured at 25°C, at 1 s⁻¹ shear rate using a Wells-Brookfield Cone/Plate Viscometer with 20mm diameter 2° taper cone (ASTM D4287).

The invention also includes an air bag coated with an anti-blocking coating according to claim 12. As indicated, the coating has a solid lubricant and a modified clay mineral having thickening properties such that a 2% by weight aqueous dispersion of the modified clay mineral thickener has a viscosity of at least 1000 mPa.s at 25°C, and a water soluble organic polymer.

The invention further includes the corresponding process according to claim 8, for preparation of said coating composition and the corresponding process claim 13 of coating with said composition.

The solid lubricant is a phyllosilicate, otherwise known as a sheet silicate. Examples of phyllosilicates which are suitable for use as solid lubricants in the present invention include mica, talc, for example talc microspheres, kaolinite, smectite, sericite and chlorite. Talc is widely available and is effective as a lubricant. Chlorite is also effective as a lubricant and has the advantage that it can be dispersed in water more easily than talc..

The solid lubricant is present from at least 3%, for example from 5 or 10 up to 40% by weight of the aqueous coating composition.

The clay mineral used as thickener is selected from saponite, bentonite, or montmorillonite.

The clay mineral is modified by a water soluble organic polymer. Suitable water soluble organic polymers include polymers containing carboxylate groups, for example carboxyl-containing addition polymers such as sodium polyacrylate or sodium polymethacrylate.

The clay mineral, for example bentonite or montmorillonite, can be modified by premixing with the water soluble organic polymer. For example, the clay mineral and the water soluble organic polymer can be uniformly mixed in water, followed by drying the mixture, for example by spray drying. The resulting dried mixture can be ground if necessary to the desired particle size, which may be in the range 1 to 20µm. The content of water soluble polymer in such a mixture may for example be in the range of 0.1 wt% to 40 wt%.

Alternatively the clay mineral such as bentonite or montmorillonite is modified by treatment with an alkylalkoxysilane. The alkylalkoxysilane is preferably an alkyltrialkoxysilane such as methyltrimethoxysilane, ethyltrimethoxysilane, methyltriethoxysilane or ethyltriethoxysilane. The alkylalkoxysilane can for example be applied to the clay mineral as a pure liquid silane or as a solution in an organic solvent.

More than one process can be used to modify the clay mineral to make its aqueous solution more viscous. For example, a composite of bentonite or montmorillonite with a water soluble polymer can be treated with an alkylalkoxysilane.

An artificially synthesized saponite, (synthetic saponite) is produced by Kunimine Industries Co., Ltd. by hydrothermal synthesis of chemicals within autoclaves. The synthetic saponite is a snow-white powder, and its gel is colourless, transparent, and highly viscous relative to natural smectite gel. These products readily form either sols or gels upon addition to water. Such synthetic smectites generally have smaller particle size than natural smectites, for example an average particle diameter only 5 or 10% of the average particle diameter of natural smectites. Such smaller particle size of synthetic smectites may be a reason why they can make aqueous compositions viscous in smaller amount of addition.

A synthetic (artificially synthesized) clay mineral, such as saponite, can be treated with an alkylalkoxysilane.

The modified clay mineral thickener is present at from 0.1 or 0.2% by weight of the coating composition up to 5 or 10% by weight. Aqueous coating compositions comprising 0.5 to 3% modified clay mineral thickener are often preferred.

The aqueous coating composition requires an organic polymer binder to enhance the adhesion of the solid lubricant to a substrate such as an air bag fabric. When a water soluble organic polymer is present in the coating composition, for example if the clay mineral thickener is modified with a water soluble polymer, that water soluble polymer may also act as the organic polymer binder of the coating composition. Alternatively, the coating composition for reducing friction and/or blocking at a surface further comprises an organic polymer binder present in aqueous dispersion. The coating present on the substrate surface thus comprises a solid lubricant dispersed in an organic polymer binder, which can consist wholly or partly of a water soluble organic polymer or can be an organic polymer dispersed in the aqueous composition.

Preferred organic polymer binders include polyurethanes, phenolic resins, epoxy resins, acrylic resins, acrylic-modified polyolefin resins, polyester resins, amino-formaldehyde resins, vinyl resins, for example polyvinyl butyral, and polyamideimide resins. Preferred polyurethanes include copolymers of a polyester or polyether polyol and an aromatic or aliphatic diisocyanate. The level of organic polymer binder is in the range 0.2 or 0.3% up to 30% by weight of the top coating composition. Levels of organic polymer binder of for example 5% up to 20% by weight of the coating composition are often preferred.

For the sake of clarification, it is to be understood that where % values are provided the total amount of e.g. the composition always adds up to 100%.

The dry coating present on a substrate to reduce friction and/or blocking according to the invention can for example comprise 50 to 95% by weight solid lubricant, 2 to 15% by weight modified clay mineral thickener and up to 45% by weight organic polymer binder. Reference to ranges in the composition on a dry coating or dry coat weight basis is intended to mean the weight calculated to exclude the weight of the water and/or any other solvent.

The coating composition for reducing friction and/or blocking may contain a flame retardant. For example, it is important that air bags do not support burning, and the air bag generally requires addition of a flame retardant in order to pass the stringent flammability tests applicable to air bags. We have found that there is generally no flammability problem when the top coat of the present invention is applied over a silicone coated air bag, but when a top coat containing no flame retardant is applied to an air bag coated with organic resin it may not pass flammability tests such as US Federal Motor Vehicles Safety Standards Test FMVSS#302 (henceforth referred to as "FMVSS#302"). The flame retardant may be most effective if it is in the top coat. An example of a preferred flame retardant is aluminum trihydrate, which preferably has not been surface treated. The antifriction coating composition can for example contain 2 to 40%, preferably 5 to 25% by weight aluminum trihydrate. Alternative flame retardants include other metal hydroxides, such as magnesium hydroxide, metal oxides, such as ferrite oxide and titanium oxide, carbonates such as zinc carbonate, and carbon blacks.

The coating composition for reducing friction and/or blocking may optionally contain a pigment, a die, an antistatic agent, a surfactant, an antiseptic, an adhesion promoter, and/or an odour eliminating agent, such as zeolite or active charcoal.

The coating composition for reducing friction and/or blocking can be applied to a substrate by a variety of techniques. Different substrates may require different coating methods. For example, the coating can be applied as a top coat to a coated air bag or coated air bag fabric by roller application, for example gravure, offset roller or lick roller, or by curtain coating, or by spray, which may be air assisted or airless spraying, or by knife over roller. Roller application is often preferred as an effective method to coat uniformly at low coating weights. The amount of coating composition transferred to the fabric is a function of pressure on the roller and/or etched surface depth in the gravure. The top coating is preferably applied at a coating weight of 0.5 or 1 g/m² up to 10 or 15 g/m² on a dry weight basis. Coating weights as low as 1 or 2 g/m² can give the required low coefficient of friction and prevent blocking.

The amount of aqueous diluent (water plus any cosolvent mixed with the water) in the antifriction coating composition can be controlled in accordance with the required viscosity for coating and the required coating weight. Usually the coating composition has a solids content of 1.5 to 50% by weight and comprises 98.5 to 50% aqueous diluent.

The coating composition of the invention can in general be applied to any substrate where reduced friction and/or reduced blocking is required. The coating composition is particularly effective when applied as a top coat on air bags or for other similar applications such as emergency chutes on aeroplanes and hot air balloons, but can also be used in other applications such as key pads, mould making, wire coating, and in improving handling in moulding processes such as a silicone moulding process.

When the coating composition of the invention is applied as a top coat to a coated air bag or coated air bag fabric, the base coat can be any of those described in the aforementioned patents. The base coat can be an organopolysiloxane composition preferably comprising an organopolysiloxane having aliphatically unsaturated hydrocarbon or hydrocarbonoxy substituents, an organosilicon crosslinker having at least 3 silicon-bonded hydrogen atoms, a catalyst able to promote the reaction of the aliphatically unsaturated hydrocarbon or hydrocarbonoxy substituents with Si-H groups and a reinforcing filler. Such a base coat is highly flexible and effective in sealing the air bag but has a high coefficient of friction.

The base coat on the air bag or air bag fabric can alternatively be any of the organic resin based coatings described in the aforementioned patents. One preferred type of organic resin is a polyurethane. A polyurethane base coat can be a reactive polyurethane which is cured on the fabric, for example by reaction of isocyanate groups with hydroxyl or amine groups or can be a thermoplastic polyurethane. Whether curable or thermoplastic, the polyurethane is generally the reaction product of a polyol with a polyisocyanate. The polyol can for example be a polyether diol such as a polytetramethyleneglycol diol, a polyester-polyetherdiol, a polycarbonatepolyether diol, a silicone-polyether diol, or a polyacrylate containing pendant hydroxyl groups. The polyisocyanate can be an aromatic diisocyanate but is preferably an aliphatic or cycloaliphatic diisocyanate. The organic resin base coat can be a hybrid urethane resin comprising polyurethane blended with acrylates, vinyls, and/or silicones as described in US-A-7543843. Such a hybrid urethane resin requires a top coat to inhibit blocking, that is sticking of the coated surfaces to each other during storage or tight packing in the air bag compartment of a vehicle. Although such an organic resin base coat has given odour problems when overcoated with various top coats, we have found that it can be overcoated with an anti-blocking coating according to this invention without any odour problem.

The base coat can alternatively comprise a polyacrylate, for example a curable polyacrylate containing pendant hydroxyl groups that can be cured by an amino resin such as a melamine-formaldehyde resin, or an ethylene vinyl acetate copolymer. The base coat can be a blend of organic resins, for example a blend of a polyurethane with a polyacrylate or with an ethylene vinyl acetate copolymer.

If the base coat is curable, it is generally cured before application of the top coating, although in an alternative process the coating composition for reducing friction and/or blocking can be applied to an uncured base coat and the combination of the base coat composition and the coating composition for reducing friction and/or blocking can be heat cured.

When the coating for reducing friction and/or blocking is applied to a cured base coat, the coating for reducing friction and/or blocking can be cured at ambient temperature or can be cured more rapidly at elevated temperature, for example in the range 50 to 200°C, particularly 100 to 150°C. One possible method of curing at elevated temperature comprises applying the coating composition for reducing friction and/or blocking to a heated substrate, for example to a coated air bag or air bag fabric immediately after heat curing the base coat.

The coating of the invention provides a low friction surface on the substrate to which it is applied. When applied over a coating having a high coefficient of friction, the coating of the invention reduces friction at the coated air bag surface and thus reduces wear of the air bag when it is subjected to movement when a vehicle is in use; such wear may result in reduced pressure retention of the air bag.

The coatings of the invention also inhibit blocking of the coated fabric surfaces, that is sticking of the coated surfaces to each other during storage or tight packing in the air bag compartment of a vehicle. Such blocking can cause very high stresses when the airbag is inflated, resulting in bag failure by tearing or by delamination of the silicone base coat from the fabric.

Use of the coatings of the invention as an air bag top coat does not give rise to any displeasing smell. We have found that when the coating of the invention is applied over a urethane polymer base coat, for example a hybrid urethane resin comprising urethane polymer blended with acrylates, vinyls, and/or silicones as described in US-A-7543843, no fishy or ammoniacal smell is released.

The invention is illustrated by the following Examples, in which parts and percentages are by weight unless otherwise stated.

### Examples 1 to 4

These Examples used a modified clay mineral thickener MCTI comprising bentonite and sodium polyacrylate, formed by uniformly mixing bentonite into an aqueous solution of sodium polyacrylate, drying the mixture, and then grinding. MCT 1 had a mixture of sodium carbonate and polyacrylate content of about 15%. A 2% aqueous solution of MCT1 had a viscosity of 20,000 mPa.s, measured at 25°C, at 1 s⁻¹ shear rate using a Wells-Brookfield Cone/Plate Viscometer with 20mm diameter 2° taper cone (ASTM 04287).

In Examples 1 and 2, MCT1 was dispersed in water and a solid lubricant (talc or chlorite) was dispersed in the resulting dispersion.

In Example 3, a polyurethane emulsion PUI was diluted with water and MCT1 and talc was dispersed in the diluted emulsion. PUI is an aliphatic-polyester type polyurethane self-crosslinking emulsion having a solids content of 32 % and a viscosity of 400mPa.s, measured as described above.

In Example 4, a modified polyolefin PO1 was diluted with water and MeT1 and talc was dispersed in the diluted emulsion. PO1 is an emulsion of polyolefin modified with acrylic resin and has a solids content of 30 % and a viscosity of 500mPa.s, measured as described above.

The formulations of the resulting top coat compositions are shown in Table 1.

### Examples 5 to 7

These Examples used a modified clay mineral thickener MCT2 comprising bentonite treated with alkyltrialkoxysilane (Betonite SH: product name of Hojun Co., Ltd.). A 2% aqueous solution of MCT2 had a viscosity of 4,300 mPa.s, measured as described above.

In Example 5, MCT2 was dispersed in water and chlorite was dispersed in the resulting dispersion. In Examples 6 and 7, PUI was diluted with water and MCn and talc or chlorite was dispersed in the diluted emulsion. The formulations of the resulting top coat compositions are shown in Table 1.

### Example 8 (Reference example using unmodified clay mineral thickener)

This Example used as clay mineral thickener artificial saponite, a product of Kunimine Industry of Tokyo, Japan sold under the trade mark Sumecton SA. A 2% aqueous solution of Sumecton SA had a viscosity of 7,600 mPa.s, measured as described above. PU I was diluted with water and Sumecton SA was dispersed in the diluted emulsion. The formulation of the resulting top coat composition is shown in Table 1.

In each of Examples 1 to 8, the ingredients were mixed and left at rest for 1 day. The stability of the mixtures were observed visually and noted in Table 1. "NO" means separation of solid ingredient was observed.

The coating compositions of each of Examples 1 to 8 were applied onto the surface of a silicone rubber by knife coating (1-10g/m²). The uniformity of coating layer was observed visually. If the coating covered the silicone rubber uniformly, it is rated in Table 1 as uniform; if the coating could not cover the silicone rubber uniformly it is rated in Table 1 as patchy. The coating layer was dried at 180°C for 10 seconds.

The silicone rubber having the overcoat layer was bent through 180 degrees. Any cracking of the overcoat layer was observed and listed in Table 1 as Crack; overcoat layers which showed no cracking are rated as Good.

The antifriction properties of the overcoat layer were assessed empirically by its feeling of touch with the finger was evaluated. "Sticky" means the same feeling of touch as silicone rubber surface without an overcoat layer. The same evaluation was carried out after 1 0 times scrubbing the surface of the overcoat layer with a finger, and after 1 0 times scrubbing the surface of the overcoat layer with cotton cloth.

The top coat compositions of Examples 9 and 10 were also tested for scratch resistance. The coated fabrics were scratched with a finger nail. The coating was rated Good if no effect of scratching was observed and NG if lifting or removal of the coating from the fabric was observed.

### Comparative Examples C1 to C8

Following the procedures used in Examples 1 to 8, coating compositions were prepared containing some of the ingredients used in the coating compositions of Examples 1 to 8. The formulations are shown in Table 2. A 2% aqueous solution of the bentonite used in comparative examples C6 and C7 had a viscosity of 1 mPa.s, measured as described above.

The coating compositions of comparative examples C1 to C8 were tested in 10 the same way as the coating compositions of Examples 1 to 8. The results are shown in Table 2.

**Table 1**

| | **Ex 1** | **Ex 2** | **Ex 3** | **Ex 4** | **Ex 5** | **Ex 6** | **Ex 7** | **Ex 8** |
|---|---|---|---|---|---|---|---|---|
| Water | 78.4 | 78.4 | 69.3 | 69.3 | 77.2 | 67.2 | 67.2 | 67.2 |
| MCT1 | 1.6 | 1.6 | 0.7 | 0.7 | | | | |
| MCT2 | | | | | 2.8 | 2.8 | 2.8 | |
| Sumecton SA | | | | | | | | 2.8 |
| Talc | 20.0 | | 20.0 | 20.0 | | 20.0 | | |
| Chlorite | | 20.0 | | | 20.0 | | 20.0 | 20.0 |
| PU1 | | | 10.0 | | | 10.0 | 10.0 | 10.0 |
| PO1 | | | | 10.0 | | | | |
| | | | | | | | | |
| Stability | Good | Good | Good | Good | Good | Good | Good | Good |
| Uniformity | Uniform | Uniform | Uniform | Uniform | Uniform | Uniform | Uniform | Uniform |
| Bending resistance | Good | Good | Good | Good | Good | Good | Good | Good |
| Antifriction Properties Initial | Smooth and Slippy | Smooth and Slippy | Smooth and Slippy | Smooth and Slippy | Smooth and Slippy | Smooth and Slippy | Smooth and Slippy | Smooth and Slippy |
| Antifriction Properties after scrubbing with finger | Smooth and Slippy | Smooth and Slippy | Smooth and Slippy | Smooth and Slippy | Smooth and Slippy | Smooth and Slippy | Smooth and Slippy | Smooth and Slippy |
| Antifriction Properties after scrubbing with cotton cloth | Slightly Sticky | Slightly Sticky | Smooth and Slippy | Smooth and Slippy | Slightly Sticky | Smooth and Slippy | Smooth and Slippy | Smooth and Slippy |
| Scratch test (finger nail) | Good | Good | Good | Good | Good | Good | Good | Good |

**Table 2**

| | **Comp Ex C1** | **Comp Ex C2** | **Comp Ex C3** | **Comp Ex C4** | **Comp Ex C5** | **Comp Ex C6** | **Comp Ex C7** | **Comp Ex C8** |
|---|---|---|---|---|---|---|---|---|
| Water | 80.0 | 90.0 | 75.0 | 98.0 | 94.0 | 86.0 | 86.0 | **80.0** |
| MCT1 | | | | 2.0 | | | | |
| Bentonite | | | | | | 4.0 | 4.0 | |
| Talc | 20.0 | | | | 5.0 | 10.0 | | |
| Chlorite | | 10.0 | 25.0 | | | | 10.0 | 10.0 |
| PU1 | | | | | | | | 10.0 |
| Sodium polyacrylate | | | | | | | | |
| | | | | | | | | |
| Stability | NG | Good | Good | Good | NG | Good | Good | Good |
| Uniformity | Patchy | Patchy | Uniform | Uniform | Patchy | Uniform | Patchy | Patchy |
| Bending resistance | Crack | Crack | Crack | Good | Crack | Good | Crack | Crack |
| Antifriction properties initial | - | - | Smooth and Slippy | Sticky | - | Smooth and Slippy | - | - |
| Antifriction properties after scrubbing with finger | - | - | Sticky | Sticky | - | Sticky | - | - |
| Antifriction properties after scrubbing with cotton cloth | - | - | Sticky | Sticky | - | Sticky | - | - |
| Scratch test (finger nail) | | | NG | NG | | NG | | |

### Examples 9 and 10 (Reference Examples)

Following the procedure of Example 1, top coat compositions were prepared from the ingredients listed in Table 3. These compositions contained a flame retardant FR1 is an untreated aluminum hydroxide fine powder of average particle size1µm. FR2 is a silane surface treated aluminum hydroxide fine powder of average particle size 1µm.

The top coat compositions of Examples 9 and 10 were tested as described above, with the difference that instead of application to silicone rubber the coating compositions were applied by gravure roller coating to the coated surface of a woven nylon air bag fabric coated with a coating sold by Milliken & Co. of Spartanburg, SC, under the trade mark Patina and believed to comprise a hybrid urethane resin comprising urethane polymer blended with an ethylene vinyl acetate copolymer and cured. The top coat was applied at 10 g/m² and heat cured at 140°C.

In addition to the tests described above, the top coat compositions of Examples 9 and 10 were tested for blocking. The coated airbag fabrics are overlapped to have coated surfaces facing each other, and evaluated whether these coated fabric surfaces slide smoothly or not. The coating was rated Good if smooth slide was observed and NG if the surfaces did not slide smoothly or got a scratch

The top coat compositions of Examples 9 and 10 were tested for flammability according to US Federal Motor Vehicles Safety Standards Test FMVSS#302 in a burn test in which a flame was applied to the edge of the fabric and the distance of burning and time of burning were measured. The requirement for passing for the FMVSS#302 standard is a burn rate of 100 mm/min or less.

The results of all the above tests are shown in Table 3.

In a comparative example C9, the silane surface treated aluminum hydroxide fine powder FR2 was used without solid lubricant. The coating composition of comparative example C∼ was tested in the same way as the coatings of Examples 9 and 10 and the results are shown in Table 3.

**Table 3**

| | **Ex 9 (weight %)** | **Ex 10 (weight %)** | **Comp Ex C9 (weight %)** |
|---|---|---|---|
| Water | 73.5 | 73.5 | 73.5 |
| MCT1 | 1.5 | 1.5 | 1.5 |
| Talc | 15 | 15 | |
| FR1 | | 10 | 25 |
| FR2 | 10 | | |

| **Results** | | | |
|---|---|---|---|
| Stability | Good | Good | Good |
| Uniformity | Uniform | Uniform | Uniform |
| Bending resistance | Good | Good | Good |
| Blocking test | Good | Good | NG |
| Antifriction Properties Initial | Smooth and Slippy | Smooth and Slippy | Smooth but not slippy |
| Antifriction Properties after scrubbing with finger | Smooth and Slippy | Smooth and Slippy | Slightly sticky |
| Flammability(FMVSS#302) | Pass | Pass | Fail |
| Scratch test (Finger nail) | Good | Good | Good |

## Claims

1. An aqueous coating composition for reducing friction and/or blocking at a surface, said composition comprising:
a solid lubricant, wherein the solid lubricant is phyllosilicate and present from at least 3% up to 40% by weight of the aqueous coating composition, and
a thickener present from 0.1 % to 10% by weight of the aqueous coating composition, wherein the thickener is
a modified clay mineral selected from saponite, bentonite or montmorillonite modified by a water soluble organic polymer or by a treatment with an alkylalkoxysilane; and
which thickener has thickening properties in the form of a viscosity of at least 1000 mPa.s measured at 25°C, at 1 s⁻¹ shear rate using a Wells-Brookfield Cone/Plate Viscometer with 20mm diameter 20° taper cone (ASTM D4287), at a 2% by weight aqueous dispersion of the modified clay mineral; and
wherein the aqueous coating composition further comprises an organic polymer binder at a level of 0.2% to 30% by weight of the aqueous coating composition.

2. An aqueous coating composition according to Claim 1, wherein the water soluble organic polymer contains carboxylate groups.

3. An aqueous coating composition according to Claim 2, wherein the water soluble organic polymer is present at 0.1 to 40% by weight based on the modified clay mineral thickener.

4. An aqueous coating composition according to any of Claims 1 to 2, wherein the modified clay mineral thickener is artificial synthesized saponite.

5. An aqueous coating composition according to any of Claims 1 to 4, wherein the modified clay mineral thickener is present at from 0.2% to 5% by weight of the coating composition.

6. An aqueous coating composition according to Claims 1 to 5, wherein the organic polymer binder is present in aqueous dispersion.

7. An aqueous coating composition according to any of Claims 1 to 6, wherein the coating composition further comprises a flame retardant.

8. A process for preparing an aqueous coating composition for reducing friction and/or blocking at a surface, comprising mixing water, a solid lubricant, wherein the solid lubricant is phyllosilicate, and a modified or synthetic clay mineral thickener selected from saponite, bentonite, montmorillonite modified by a water soluble organic polymer or by a treatment with an alkylalkoxysilane;, wherein said thickener has thickening properties in the form of a viscosity of at least 1000 mPa.s measured at 25°C, at 1 s⁻¹ shear rate using a Wells-Brookfield Cone/Plate Viscometer with 20mm diameter 20° taper cone (ASTM D4287), at 2% by weight aqueous dispersion of the modified or synthetic clay mineral thickener; and further wherein the solid lubricant is present from at least 3% up to 40% by weight of the aqueous coating composition, wherein the modified clay mineral thickener is present from 0.1% to 10% by weight of the aqueous coating composition, and wherein the aqueous coating composition further comprises an organic polymer binder at a level of 0.2% to 30% by weight of the aqueous coating composition.

9. A process according to Claim 8, wherein a water soluble organic polymer is premixed with the clay mineral to form a modified clay mineral thickener.

10. Use of an aqueous coating composition in accordance with any one of claims 1-9 as a top coat on a substrate to reduce friction and/or blocking.

11. Use according to Claim 10, wherein the substrate is an air bag or a coated fabric which is subsequently formed into an air bag.

12. An air bag coated with an anti-blocking coating made from a composition in accordance with any one of claims 1-7 wherein the anti-blocking coating comprises 50 to 95% by weight the solid lubricant, 2 to 15% by weight the modified clay mineral thickener and up to 45% by weight organic polymer binder.

13. A process of coating a substrate to reduce friction and/or blocking, wherein the substrate is coated with an aqueous coating composition in accordance with any one of claims 1-7.

14. A process according to Claim 13, wherein a fabric coated with an organic resin is top coated with the said aqueous coating composition.

## Patentansprüche

1. Eine wässrige Beschichtungszusammensetzung zum Reduzieren von Reibung und/oder Blockierung an einer Oberfläche, wobei die Zusammensetzung Folgendes beinhaltet:
ein Feststoffschmiermittel, wobei das Feststoffschmiermittel Phyllosilikat ist und zu mindestens 3 Gew.-% bis zu 40 Gew.-% der wässrigen
Beschichtungszusammensetzung vorhanden ist, und
ein Verdickungsmittel, das zu 0,1 Gew.-% bis 10 Gew.-% der wässrigen Beschichtungszusammensetzung vorhanden ist; wobei das Verdickungsmittel ein modifiziertes Tonmineral ist, das aus Saponit, Bentonit oder Montmorillonit, modifiziert durch ein wasserlösliches organisches Polymer oder durch eine Behandlung mit einem Alkylalkoxysilan, ausgewählt ist; und
wobei das Verdickungsmittel Verdickungseigenschaften in Form einer Viskosität von mindestens 1000 mPa.s, gemessen bei 25 °C, bei 1 s⁻¹ Schergefälle unter Verwendung eines Wells-Brookfield Kegel/Plattenviskosimeters mit 20 mm Durchmesser, 20° Spitzkegel (ASTM D4287), bei einer wässrigen Dispersion des modifizierten Tonminerals von 2 Gew.-%, aufweist; und
wobei die wässrige Beschichtungszusammensetzung ferner ein organisches Polymerbindemittel in einer Menge von zu 0,2 Gew.-% bis 30 Gew.-% der wässrigen Beschichtungszusammensetzung beinhaltet.

2. Wässrige Beschichtungszusammensetzung gemäß Anspruch 1, wobei das wasserlösliche organische Polymer Carboxylatgruppen enthält.

3. Wässrige Beschichtungszusammensetzung gemäß Anspruch 2, wobei das wasserlösliche organische Polymer, bezogen auf das modifizierte Tonmineralverdickungsmittel, zu 0,1 bis 40 Gew.-% vorhanden ist.

4. Wässrige Beschichtungszusammensetzung gemäß einem der Ansprüche 1 bis 2, wobei das modifizierte Tonmineralverdickungsmittel künstliches synthetisiertes Saponit ist.

5. Wässrige Beschichtungszusammensetzung gemäß einem der Ansprüche 1 bis 4, wobei das modifizierte Tonmineralverdickungsmittel zu von 0,2 Gew.-% bis 5 Gew.-% der Beschichtungszusammensetzung vorhanden ist.

6. Wässrige Beschichtungszusammensetzung gemäß einem der Ansprüche 1 bis 5, wobei das organische Polymerbindemittel in wässriger Dispersion vorhanden ist.

7. Wässrige Beschichtungszusammensetzung gemäß einem der Ansprüche 1 bis 6, wobei die Beschichtungszusammensetzung ferner einen Flammhemmer beinhaltet.

8. Ein Verfahren zum Herstellen einer wässrigen Beschichtungszusammensetzung zum Reduzieren von Reibung und/oder Blockierung an einer Oberfläche, beinhaltend Mischen von Wasser, einem Feststoffschmiermittel, wobei das Feststoffschmiermittel Phyllosilikat ist, und einem modifizierten oder synthetischen Tonmineralverdickungsmittel, das aus Saponit, Bentonit, Montmorillonit, modifiziert durch ein wasserlösliches organisches Polymer oder durch eine Behandlung mit einem Alkylalkoxysilan, ausgewählt ist; wobei das Verdickungsmittel Verdickungseigenschaften in der Form einer Viskosität von mindestens 1000 mPa.s, gemessen bei 25 °C, bei 1 s⁻¹ Schergefälle unter Verwendung eines Wells-Brookfield Kegel/Plattenviskosimeters mit 20 mm Durchmesser, 20° Spitzkegel (ASTM D4287), bei einer wässrigen Dispersion des modifizierten oder synthetischen Tonminerals von 2 Gew.-% aufweist; und wobei ferner das Feststoffschmiermittel zu mindestens 3 Gew.-% bis zu 40 Gew.-% der wässrigen Beschichtungszusammensetzung vorhanden ist, wobei das modifizierte Tonmineralverdickungsmittel zu 0,1 Gew.-% bis 10 Gew.-% der wässrigen Beschichtungszusammensetzung vorhanden ist, wobei die wässrige Beschichtungszusammensetzung ferner ein organisches Polymerbindemittel in einer Menge von zu 0,2 Gew.-% bis 30 Gew.-% der wässrigen Beschichtungszusammensetzung beinhaltet.

9. Verfahren gemäß Anspruch 8, wobei ein wasserlösliches organisches Polymer mit dem Tonmineral vorgemischt wird, um ein modifiziertes Tonmineralverdickungsmittel zu bilden.

10. Verwendung einer wässrigen Beschichtungszusammensetzung gemäß einem der Ansprüche 1-9 als eine Deckbeschichtung auf einem Substrat, um Reibung und/oder Blockierung zu reduzieren.

11. Verwendung gemäß Anspruch 10, wobei das Substrat ein Airbag oder ein beschichtetes Gewebe ist, das in der Folge in einen Airbag gebildet wird.

12. Ein Airbag, der mit einer Antiblockierungsbeschichtung, die mit einer Zusammensetzung gemäß einem der Ansprüche 1-7 gefertigt ist, beschichtet ist, wobei die Antiblockierungsbeschichtung zu 50 bis 95 Gew.-% das Feststoffschmiermittel, zu 2 bis 15 Gew.-% das modifizierte Tonmineralverdickungsmittel und bis zu 45 Gew.-% organisches Polymerbindemittel beinhaltet.

13. Ein Verfahren zum Beschichten eines Substrats, um Reibung und/oder Blockierung zu reduzieren, wobei das Substrat mit einer wässrigen Beschichtungszusammensetzung gemäß einem der Ansprüche 1-7 beschichtet ist.

14. Verfahren gemäß Anspruch 13, wobei ein Gewebe, das mit einem organischen Harz beschichtet ist, mit der wässrigen Beschichtungszusammensetzung deckbeschichtet wird.

## Revendications

1. Une composition de revêtement aqueuse pour réduire le frottement et/ou l'adhérence de contact au niveau d'une surface, ladite composition comprenant :
un lubrifiant solide, le lubrifiant solide étant un phyllosilicate et présent en une quantité allant d'au moins 3 % jusqu'à 40 % en poids de la composition de revêtement aqueuse, et
un épaississant présent en une quantité allant de 0,1 % à 10 % en poids de la composition de revêtement aqueuse, l'épaississant étant un minéral argileux modifié sélectionné parmi la saponite, la bentonite ou la montmorillonite modifiée par un polymère organique soluble dans l'eau ou par un traitement avec un alkylalcoxysilane ; et
lequel épaississant a des propriétés épaississantes sous la forme d'une viscosité d'au moins 1 000 mPa.s mesurée à 25 °C, à un taux de cisaillement de 1 s⁻¹ à l'aide d'un viscosimètre cône-plan Wells-Brookfield avec un cône effilé de 20° et d'un diamètre de 20 mm (ASTM D4287), à une dispersion aqueuse de 2 % en poids du minéral argileux modifié ; et
la composition de revêtement aqueuse comprenant en outre un liant polymère organique à un niveau de 0,2 % à 30 % en poids de la composition de revêtement aqueuse.

2. Une composition de revêtement aqueuse selon la revendication 1, dans laquelle le polymère organique soluble dans l'eau contient des groupes carboxylate.

3. Une composition de revêtement aqueuse selon la revendication 2, dans laquelle le polymère organique soluble dans l'eau est présent à hauteur de 0,1 à 40 % en poids rapporté à l'épaississant minéral argileux modifié.

4. Une composition de revêtement aqueuse selon n'importe lesquelles des revendications 1 à 2, dans laquelle l'épaississant minéral argileux modifié est la saponite synthétisée artificielle.

5. Une composition de revêtement aqueuse selon n'importe lesquelles des revendications 1 à 4, dans laquelle l'épaississant minéral argileux modifié est présent à hauteur de 0,2 % à 5 % en poids de la composition de revêtement.

6. Une composition de revêtement aqueuse selon les revendications 1 à 5, dans laquelle le liant polymère organique est présent dans une dispersion aqueuse.

7. Une composition de revêtement aqueuse selon n'importe lesquelles des revendications 1 à 6, la composition de revêtement comprenant en outre un ignifugeant.

8. Un procédé pour préparer une composition de revêtement aqueuse pour réduire le frottement et/ou l'adhérence de contact au niveau d'une surface, comprenant le fait de mélanger de l'eau, un lubrifiant solide, le lubrifiant solide étant un phyllosilicate, et un épaississant minéral argileux modifié ou synthétique sélectionné parmi la saponite, la bentonite, la montmorillonite modifiée par un polymère organique soluble dans l'eau ou par un traitement avec un alkylalcoxysilane ; ledit épaississant ayant des propriétés épaississantes sous la forme d'une viscosité d'au moins 1 000 mPa.s mesurée à 25 °C, à un taux de cisaillement de 1 s⁻¹ à l'aide d'un viscosimètre cône-plan Wells-Brookfield avec un cône effilé de 20° et d'un diamètre de 20 mm (ASTM D4287), à une dispersion aqueuse de 2 % en poids de l'épaississant minéral argileux modifié ou synthétique ; et en outre le lubrifiant solide étant présent en une quantité allant d'au moins 3 % jusqu'à 40 % en poids de la composition de revêtement aqueuse, l'épaississant étant présent en une quantité allant de 0,1 % à 10 % en poids de la composition de revêtement aqueuse, et la composition de revêtement aqueuse comprenant en outre un liant polymère organique à un niveau de 0,2 % à 30 % en poids de la composition de revêtement aqueuse.

9. Un procédé selon la revendication 8, dans lequel un polymère organique soluble dans l'eau est prémélangé avec le minéral argileux afin de former un épaississant minéral argileux modifié.

10. Utilisation d'une composition de revêtement aqueuse conformément à n'importe laquelle des revendications 1 à 9 en tant que revêtement extérieur sur un substrat afin de réduire le frottement et/ou l'adhérence de contact.

11. Utilisation selon la revendication 10, dans laquelle le substrat est un coussin de sécurité gonflable ou un tissu revêtu qui est subséquemment formé en un coussin de sécurité gonflable.

12. Un coussin de sécurité gonflable revêtu d'un revêtement antiadhérent réalisé à partir d'une composition conformément à n'importe laquelle des revendications 1 à 7, le revêtement antiadhérent comprenant de 50 à 95 % en poids du lubrifiant solide, de 2 à 15 % en poids de l'épaississant minéral argileux modifié et jusqu'à 45 % en poids de liant polymère organique.

13. Un procédé de revêtement d'un substrat afin de réduire le frottement et/ou l'adhérence de contact, le substrat étant revêtu d'une composition de revêtement aqueuse conformément à n'importe laquelle des revendications 1 à 7.

14. Un procédé selon la revendication 13, dans lequel un tissu revêtu d'une résine organique est revêtu sur l'extérieur de ladite composition de revêtement aqueuse.
